# EUROPÄISCHE PATENTANMELDUNG

(11) **EP 1 249 675 A2**
(43) Veröffentlichungstag der Anmeldung: **16.10.2002**
(21) Anmeldenummer: 02007757.4
(22) Anmeldetag: 05.04.2002
(51) Int. Cl.: F25B 49/02, H02P 7/74

(54) **Verdichtersatz und Verfahren zum Regeln eines Verdichtersatzes**

(30) Priorität: 12.04.2001 DE 10118444
(71) Anmelder: Linde Aktiengesellschaft, 65189 Wiesbaden (DE)
(72) Erfinder: Schierhorn, Uwe, 50389 Wesseling (DE); Olejnik, Janusz, 50670 Köln (DE); Gassen, Heinz, 53489 Sinzig (DE)

(57) **Zusammenfassung**

Es werden ein Verfahren zum Regeln eines Verdichtersatzes, bestehend aus wenigstens zwei, von Elektromotoren angetriebenen Verdichtem, sowie ein Verdichtersatz, bestehend aus wenigstens zwei, von Elektromotoren angetriebenen Verdichtern, beschrieben.

Erfindungsgemäß ist nunmehr nur ein Frequenzumrichter vorgesehen, der zumindest zeitweise abwechselnd den Verdichtem zugeordnet wird.

Im Falle des Vorsehens von vier oder mehr Verdichtem sind zwei oder mehr Frequenzumrichter vorgesehen, wobei jeder Frequenzumrichter jeweils wenigstens zwei Verdichtern abwechselnd zugeordnet wird.

## Beschreibung

Die Erfindung betrifft ein Verfahren zum Regeln eines Verdichtersatzes, bestehend aus wenigstens zwei, von Elektromotoren angetriebenen Verdichtern.

Ferner betrifft die Erfindung einen Verdichtersatz, bestehend aus wenigstens zwei, von Elektromotoren angetriebenen Verdichtern.

In gewerblichen und industriellen Kälte-, Klima- und Wärmepumpenanlagen kommen zur Erzeugung der erforderlichen Kälteleistung u. a. Verdichter zum Einsatz. Diese Verdichter werden im Regelfall von Elektromotoren angetrieben. Abhängig von der Größe der Kälte- oder Klimaanlage können auch mehrere Verdichter erforderlich sein, die dann zu einem sog. Verdichtersatz zusammengeschaltet werden.

Bei der Verwendung dieser Verdichtersätze tritt jedoch das Problem auf, dass zum einen die Verdichterleistung an den tageszeitlich stark schwankenden Bedarf angepasst werden muss und zum anderen auch während kurzzeitiger Bedarfsspitzen die für die Kältebereitstellung erforderliche Verdichterleistung erbracht werden muss; Gleiches gilt selbstverständlich auch für den Betrieb von Klima- und Wärmepumpenanlagen.

Um dem vorgenannten Problem zu begegnen, werden im Wesentlichen zwei unterschiedliche Lösungen angewandt. Zum einen wird jedem Verdichter innerhalb des Verdichtersatzes ein eigener Frequenzumrichter zugeordnet. Diese Methode weist zwar eine gute Teillastrate auf, hat jedoch den Nachteil, dass die Investitionskosten vergleichsweise hoch sind. Zum anderen kommen Verdichtersätze zum Einsatz, die aus zwei oder mehreren unterschiedlichen Verdichtern bestehen, wobei jedoch lediglich einer der Verdichter mittels eines Frequenzumrichters drehzahlgeregelt betrieben wird. Nachteilig bei dieser Verfahrensweise ist jedoch, dass die Verdichter unterschiedlich lange betrieben werden und damit einem unterschiedlichen Verschleiß unterliegen. Des Weiteren weist diese Methode eine geringere Betriebssicherheit auf. Ferner ist eine Grundlastumschaltung nicht möglich.

Aufgabe der vorliegenden Erfindung ist es, ein gattungsgemäßes Verfahren zum Regein eines Verdichtersatzes sowie einen gattungsgemäßen Verdichtersatz anzugeben, das bzw. der die vorgenannten Nachteile vermeidet und darüber hinaus eine Teillastrate von wenigstens 20 % gewährleisten kann.

Zur Lösung dieser Aufgabe wird ein gattungsgemäßes Verfahren zum Regeln eines Verdichtersatzes vorgeschlagen, das dadurch gekennzeichnet ist, dass lediglich ein Frequenzumrichter vorgesehen ist und dieser zumindest zeitweise abwechselnd den Verdichtern zugeordnet wird.

Der erfindungsgemäße Verdichtersatz, bestehend aus wenigstens zwei, von Elektromotoren angetriebenen Verdichtern, zeichnet sich dadurch aus, dass ein Frequenzumrichter, der den Verdichtern abwechselnd zugeordnet werden kann, vorgesehen ist.

Die Erfindung weiterbildend wird vorgeschlagen, dass die Verdichter identisch sind.

Der Begriff "identisch" bedeutet hierbei, dass die Verdichter ein identisches Förderverhalten aufweisen. Dies ist dann der Fall, wenn der reale saug- oder druckseitige Förderstrom unter gleichen äußeren Bedingungen und jeweils bei gleicher minimaler Frequenz, maximaler Frequenz oder Netzfrequenz von Verdichter zu Verdichter nicht mehr als 10 % abweicht.

Es sei jedoch nochmals betont, dass die Erfindung nicht auf die Verwendung identischer Verdichter beschränkt ist.

Die Verwendung identischer Verdichter führt zu einer deutlichen Kosteneinsparung, da die Lagerhaltung - dies gilt auch für die erforderlichen Ersatzteile - minimiert werden kann. Sofern diese Verdichter in gleichem Umfange betrieben werden, unterliegen sie einem ähnlichen Verschleiß, so dass die regelmäßig erforderlichen Wartungsarbeiten jeweils an allen Verdichtem gleichzeitig durchgeführt werden können.

Während bei der vorbeschriebenen, dem Stand der Technik entsprechenden Verfahrensweise lediglich ein Verdichter mittels eines Frequenzumrichters drehzahlgeregelt betrieben wird, können nun beide bzw. alle Verdichter - sofern ihnen der Frequanzumrichter zugeordnet ist - drehzahlgeragelt betrieben werden.

Das erfindungsgemäße Verfahren zum Regeln eines Verdichtersatzes sowie den erfindungsgemäßen Verdichtersatz weiterbildend wird vorgeschlagen, dass im Falle des Vorsehens von vier oder mehr Verdichtern zwei oder mehr Frequenzumrichter vorgesehen sind und jeder Frequenzumrichter jeweils wenigstens zwei Verdichtern abwechselnd zugeordnet wird.

Prinzipiell kann ein Frequenzumrichter einer beliebigen Anzahl von Verdichtern zugeordnet werden. Bei einem aus bspw. vier oder sechs Verdichtem bestehenden Verdichtersatz kann es jedoch zweckmäßig sein, zwei bzw. drei Frequenzumrichter vorzusehen und jeweils einen Frequenzumrichter einem Verdichterpaar zuzuordnen.

Die abwechselnde Zuordnung eines Frequenzumrichters zu den Verdichtern wird durch eine Steuerung erreicht, wobei die zeitlichen Abstände zwischen der Neuzuordnung des Frequenzumrichters zu einem Verdichter variierbar sein sollten. Dadurch wird erreicht, dass nach einer voreingestellten Zeit mittels der Steuerung ein Grundlastwechsel durchgeführt werden kann, also derjenige Verdichter, der am starren Netz bzw. Festnetz hängt, auf den Frequenzumrichter umgeschaltet wird und umgekehrt. Hierbei beginnt die voreingestellte Zeit beim Stillstand aller zu einem Verdichtersatz zusammengeschalteten Verdichter zu laufen, wobei vorzugsweise dieser Zeitpunkt bzw. Zustand zum Grundlastwechsel genutzt wird.

Des Weiteren ist die Steuerung dahingehend auszulegen, dass über ein auszuregelndes Signal - bspw. den Saugdruck - dem oder den Frequenzumrichtern die einzustellende Frequenz mitgeteilt und die Verdichter bzw. deren Elektromotoren entsprechend angesteuert werden.

Das erfindungsgemäße Verfahren sowie den erfindungsgemäßen Verdichtersatz weiterbildend wird vorgeschlagen, dass der oder die verwendeten Frequenzumrichter ein Hochdrehen der Elektromotoren bis wenigstens zu dem Wurzel-aus-dem-Dreifachen der Frequenz des starren Netzes ermöglichen.

Die Elektromotoren der Verdichter sind hierzu in Dreieckschaltung anzuschließen. Der Frequenzumrichter vermindert bei Netzfrequenz die eingangsseitige, verkettete Spannung des Netzes zwischen den Phasen um den Faktor "Wurzel-aus-Drei" an seinem Ausgang, z. B. von 400 Volt auf 230 Volt. Da der Frequenzumrichter eine konstante Spannungs-Frequenz-Kennlinie besitzt, wird durch das anschließende Hochfahren der Ausgangsfrequenz von der Netzfrequenz auf die maximale Frequenz, z. B. von 50 Hz auf 87 Hz, folglich die Ausgangsspannung von z. B. 230 Volt auf 400 Volt ansteigen.

Die vorgenannte Steuerung sollte des Weiteren dahingehend ausgelegt sein, dass sie im Falle des Ausfalles eines Verdichters den ausgefallen Verdichter nicht mehr dem oder einem der Frequenzumrichter zuordnet. In einer derartigen Situation müssen der oder die verbleibenden Verdichter durch entsprechendes Hochdrehen mehr (Kälte)Leistung bereitstellen. Fällt der oder einer der Frequenzumrichter aus, so werden die ihm zugeordneten Verdichter entweder mit dem starren Netz bzw. Festnetz verbunden oder einem anderen Frequenzumrichter zugeordnet.

Das erfindungsgemäße Verfahren zum Regeln eines Verdichtersatzes sowie der erfindungsgemäße Verdichtersatz ermöglichen ein Verringerung der Investitionkosten, da zum einen nunmehr baugleiche Verdichter verwendet werden und zum anderen die Zahl der Frequenzumrichter - zumindest verglichen mit einem Verfahren, bei dem jedem Verdichter ein Frequenzumrichter zugeschaltet ist, - verringert wird. Da wenigstens zwei Verdichter eingesetzt werden und der Frequenzumrichter umgangen werden kann, ist zudem die erforderliche Redundanz gegeben.

Aufgrund der erwähnten Grundlastumschaltung lassen sich im Wesentlichen identische Verdichterlaufzeiten und damit einhergehend ein im Wesentlichen identischer Verschleiß der Verdichter realisieren.

Bei einem Verdichtersatz bestehend aus zwei Verdichtem sind im Falle des Ausfalles einer Verdichter/Elektromotor-Einheit noch 60 % der gesamten Leistung vorhanden. Bei einem Ausfall des Frequenzumrichters sind sogar noch ca. 80 % der Leistung realisierbar. Diese Betriebssicherheit übertrifft - ohne Mehrkosten zu verursachenandere Lösungen, unabhängig davon, ob sie mit oder ohne Drehzahlregelung arbeiten.

Das erfindungsgemäße Verfahren zum Regeln eines Verdichtersatzes sowie der erfindungsgemäße Verdichtersatz ermöglichen die Realisierung einer Teillastrate von wenigstens ≤ 20 %. Sofern mit nur zwei Verdichtern eine niedrigere Teillastrate gewünscht wird, empfiehlt es sich - entsprechend einer weiteren vorteilhaften Ausgestaltung der Erfindung -, dass zumindest einer der Verdichter stufengeregelt, vorzugsweise mittels einer Zylinderabschaltung, betrieben werden kann.

Die Erfindung ist mit allen bekannten Verdichterbauarten, wie bspw. Hubkolben-, Scroll-, Schrauben-, Turboverdichtern, etc. realisierbar. Diese können hierbei hermetisch, halbhermetisch oder offen ausgeführt sein.

## Patentansprüche

1. Verfahren zum Regeln eines Verdichtersatzes, bestehend aus wenigstens zwei, von Elektromotoren angetriebenen Verdichtern, **dadurch gekennzeichnet, dass** ein Frequenzumrichter vorgesehen ist und dieser zumindest zeitweise abwechselnd den Verdichtern zugeordnet wird.

2. Verfahren nach Anspruch 1, **dadurch gekennzeichnet, dass** im Falle des Vorsehens von vier oder mehr Verdichtern zwei oder mehr Frequenzumrichter vorgesehen sind und jeder Frequenzumrichter jeweils wenigstens zwei Verdichtern abwechselnd zugeordnet wird.

3. Verfahren nach Anspruch 1 oder 2, **dadurch gekennzeichnet, dass** die Verdichter identisch sind.

4. Verfahren nach einem der vorhergehenden Ansprüche 1 bis 3, **dadurch gekennzeichnet, dass** der oder die verwendeten Frequenzumrichter ein Hochdrehen der Elektromotoren bis wenigstens zu dem Wurzel-aus-dem-Dreifachen der Frequenz des starren Netzes ermöglichen.

5. Verfahren nach einem der vorhergehenden Ansprüche 1 bis 4, **dadurch gekennzeichnet, dass** bei Ausfall eines Verdichters diesem der Frequenzumrichter nicht mehr zugeordnet wird.

6. Verfahren nach einem der vorhergehenden Ansprüche 1 bis 5, **dadurch gekennzeichnet, dass** bei Ausfall des oder eines Frequenzumrichters die dem ausgefallenen Frequenzumrichter zugeordneten Verdichter mit dem starren Netz verbunden oder einem anderen Frequenzumrichter zugeordnet werden.

7. Verfahren nach einem der vorhergehenden Ansprüche 1 bis 6, **dadurch gekennzeichnet, dass** zumindest einer der Verdichter stufengeregelt, vorzugsweise mittels einer Zylinderabschaltung, betrieben werden kann.

8. Verdichtersatz, bestehend aus wenigstens zwei, von Elektromotoren angetriebenen Verdichtern, **dadurch gekennzeichnet, dass** ein Frequenzumrichter, der den Verdichtem abwechselnd zugeordnet werden kann, vorgesehen ist.

9. Verdichtersatz nach Anspruch 8, **dadurch gekennzeichnet, dass** im Falle des Vorsehens von vier oder mehr Verdichtem zwei oder mehr Frequenzumrichter vorgesehen sind und jeder Frequenzumrichter jeweils wenigstens zwei Verdichtern abwechselnd zugeordnet werden kann.

10. Verdichtersatz nach einem der Ansprüche 8 oder 9, **dadurch gekennzeichnet, dass** die Verdichter identisch sind.

11. Verdichtersatz nach einem der Ansprüche 8 bis 10, **dadurch gekennzeichnet, dass** der oder die verwendeten Frequenzumrichter ein Hochdrehen der Elektromotoren bis wenigstens zu dem Wurzel-aus-dem-Dreifachen der Frequenz des starren Netzes ermöglichen.

12. Verdichtersatz nach einem der Ansprüche 8 bis 11, **dadurch gekennzeichnet, dass** wenigstens ein Verdichter, vorzugsweise mittels einer Zylinderabschaltung, stufenregelbar ist.
